# EUROPEAN PATENT APPLICATION

(11) **EP 2 674 040 A1**
(43) Date of publication of application: **18.12.2013**
(21) Application number: 11858249.3
(22) Date of filing: 07.02.2011
(51) Int. Cl.: A23L 1/18

(54) **METHOD FOR ADDING FLAVOR TO POPCORN KERNELS**

(71) Applicant: Dode S.A., 08197 Sant Cugat del Vallés (ES)
(72) Inventor: CAMPÀ GONFRAUS, Jordi, E-08197 Sant Cugat del Vallés (ES); MONTAGUT SALA, Salvador, E-08197 Sant Cugat del Vallés (ES)
(74) Representative: Elzaburu Marquez, Alberto
(86) International application number: PCT/ES2011/070079
(87) International publication number: WO 2012/107604

(57) **Abstract**

A a method for giving flavor to popcorn kernels before they are packaged in a microwaveable bag, in which a flavoring element is adhered to the exterior portion of the popcorn kernel previously covered with a coating material, or fixing agent free of oil or grease.

## Description

### SUBJECT MATTER OF THE INVENTION

The present invention refers to a method for giving flavor to popcorn kernels before they are packaged inside a containing bag for their preparation in a microwave oven.

### STATE OF THE ART

The technique is known in the art of a package or bag which contains popcorn kernels and is made of a paper type material that is sufficiently flexible for adequately expanding under the steam pressure that forms when the bag and, consequently, the kernels of corn are exposed to microwaves produced inside the microwave oven. This results in the starch that comprises the corn kernel exploding, thus creating the popcorn.

The popcorn bag for microwaves includes an amount of unexploded kernels of corn for the popcorn, grease or oil, and a flavoring, such as salt, for example.

The kernel of corn explodes when heat is applied in such a way that the hot oil impregnates the resulting popcorn and the salt adheres to it.

It may also be noted that the flavoring can be added before the expansion of the popcorn, that is, the bag of popcorn includes flavored kernels of corn.

The grease or oil is added to the kernels of corn and/or popcorn to improve their organoleptic qualities, such as the flavor or palatability.

Not only does this addition of grease or oil convert the popcorn into a higher caloric product, but it also has other consequences. Certain types of greases or oils are unhealthy if consumed in excess due to their high content of saturated fatty acids or saturated fats, which have been linked to cardiovascular diseases.

Many consumers who like to consume popcorn prepared in microwaves demand that they have reduced grease or oil content, given that certain types of greases and oils in foods are not welcome on account of their potential danger to the health of consumers.

### SUMMARY

The present invention seeks to resolve one or more of the drawbacks described above by means of popcorn kernels as claimed in the claims.

One object is to create a method for providing flavor to popcorn kernels before they are packaged in a bag for microwaves, in which a flavoring element is adhered, attached or spread on the exterior portion of the popcorn kernel previously covered with a coating material, or a fixing agent free of oil or grease.

The coating material is of a maltodextrin type, starch from grains, corn, tubers, rice flour, wheat starch, modified corn or potato starch, mixtures thereof, or other starchy materials.

Maltodextrin is a sweet polysaccharide obtainable by hydrolysis of starch, namely a carbohydrate, and so it is a natural additive. Generally it is obtained from corn, or starting from wheat or barley, although there is also matlodextrin obtained from potato starch and from tapioca.

Still another object is to provide popcorn with low calorie content.

Another object is to create a method for providing flavor to popcorn kernels that comprises a mixing step of the popcorn kernels with an aqueous solution comprising a coating material of a malodextrin type that is free of grease or oil, for adhering to or spreading on the popcorn kernels.

Furthermore, the method likewise comprises a mixing step of the popcorn kernels coated with the coating material free of grease or oil with an aqueous solution that comprises a flavoring element for adhering, attaching or spreading onto the coating material that coats the popcorn kernels.

The method comprises a drying stage for the flavored popcorn kernels for the purpose of returning the flavored kernels of corn to their natural humidity comprising between 12% and 14% of the kernel of corn.

The method further comprises a packaging stage of the flavored and dried popcorn kernels in a containing bag of flexible paper for microwave ovens.

### DESCRIPTION OF A MODE OF EMBODIMENT

A method of production of flavored popcorn kernels with a low grease or oil content comprising the supply of a coating material on the popcorn kernels as a fixing agent of a flavoring element of the kernel of corn.

The coating material is of a maltodextrin type, starch from grains, corn, tubers, rice flour, wheat starch, modified corn or potato starch, mixtures thereof, or other starchy materials.

The coating material is supplied as grain, powder or extruded into a water type solvent at a sufficient temperature to be able to obtain an homogeneous aqueous solution free of coating material lumps at an ambient temperature of between 20°C and 30°C, for example, at 25°C, inside a blending device.

The blender is supplied in a controlled and equal amount of water and modified potato starch, in such a way that the coating material is dispersed in the water by means of shaking during a controlled amount of time.

For example, a blender is supplied with 250 gr. of modified potato starch and 250 gr of water, and the starch is dispersed by shaking the water for 2 minutes.

A drageeing device is supplied with the aqueous solution obtained and popcorn kernels. The drageeing device comprises a recipient or pump with rods that rotate so that the popcorn kernels are coated with the coating material from the generated aqueous solution, in such a way that the coating material such as a modified potato starch, for example, acetylated potato starch, adheres to, is attached to or spread on the popcorn kernels in such a way that the popcorn kernels are completely covered.

A controlled amount of popcorn kernels is supplied to the drageeing device. For example, the amount of kernels of corn supplied to the drageeing device may be 25 kg of popcorn kernels.

The mixing or coating stage is carried out during a controlled amount of time and in an ambient temperature range of between 20°C and 30°C, sufficient to allow the popcorn kernels to be completely impregnated, for example, 5 minutes at an ambient temperature of 25°C.

A controlled amount of a flavoring element, such as common salt, is supplied to the blender together with a controlled amount of solvent, such as water, to obtain an aqueous flavoring solution.

The flavoring element may be added to the water as a grain, powder, etc.

The concentration of flavoring for obtaining the desired flavoring of the popcorn kernels depends on the type of flavoring and the desired intensity of flavor of the end product, that is, the exploded popcorn kernels.

The flavoring element is dispersed by shaking in the water for a controlled amount of time and at a controlled and suitable ambient temperature, for example, 25°C.

For example 1,750 gr. of common salt is dispersed or dissolved in 800 gr. of water by shaking during a period of 2 minutes.

Once the popcorn kernels have been completely covered by the modified starch solution, the obtained flavoring mixture is supplied to the drageeing device so that the flavoring element of the flavoring solution adhered to, is attached or spread on the surface of the kernel of corn that is completely coated by the coating or adhereing material.

That is, the popcorn kernels covered by the coating material are soaked in the aqueous solution comprising the flavoring element.

The blending or fixing stage of the flavoring element occurs during a controlled amount of time, for example, 3 minutes, and at a controlled and sufficient ambient temperature between, for example, 20°C and 30°C.

After the required time has elapsed for the flavoring element to adhere to the popcorn kernels coated in modified starch, said flavored kernel of corn is then dried with hot air at a controlled temperature ranging from 50°C and 55°C, in order to restore the flavored kernels of corn to their natural humidity.

To do so the flavored kernels of corn are removed from the drageeing device and spread out over a surface in which a group of pass-through holes has been made, through which a current of hot air is passed at a controlled speed, depending on the machine used, which restores the popcorn kernels to their natural humidity of between 12% and 14% of the weight of the kernel of corn.

After the fixing of the flavoring and drying step is finished, the flavored and dried popcorn kernels are supplied to a packaging machine for packaging a controlled amount of flavored popcorn kernels, free of added greases or oils, in a closed recipient such as a flexible paper bag for microwave ovens.

Consequently the flavored kernels of corn are packaged in paper bags in a raw state, and may be used in devices that a supply heat in order to explode the popcorn kernels.

Other flavoring elements may be butter, different types of salt, sugar, different types of colours with alcohols, sweeteners, etc.

## Claims

1. **A method for giving flavor** to popcorn kernels, **characterized in that** the method comprises a mixing step of the popcorn kernels with an aqueous solution that comprises a coating material that is free of grease or oil for adhering to or spreading on the popcorn kernels.

2. **A method** in accordance with claim 1, **characterized in that** coating material is of a maltodextrin type, starch from cereal, corn, tubers, rice flour, wheat starch, modified corn or modified potato starch, mixtures thereof, or other starchy materials.

3. **A method** in accordance with claim 2, **characterized in that** it is carried out during a controlled amount of time and in a temperature range of between 20°C and 30°C, sufficient for the coating material, which is free of grease and oil, to adhere to or be spread on the popcorn kernels.

4. **A method** in accordance with claim 3, **characterized in that** the blending stage is conducted for 5 minutes at an ambient temperature of 25°C.

5. **A method** in accordance with claim 2, **characterized in that** the method likewise comprises a blending step of the popcorn kernels coated with the coating material, which is free of grease or oil, with an aqueous solution that comprises a flavoring element for adhering, attaching, or spreading on the coating material that coats the popcorn kernels.

6. **A method** in accordance with claim 5, **characterized in that** it is carried out during a controlled amount of time and in a temperature range of between 20°C and 30°C, sufficient for the flavoring element to be completely adhered to or spread on the coating material free of grease or oil that coats the popcorn kernels.

7. **A method** in accordance with claim 6, **characterized in that** the blending stage is conducted for 3 minutes at an ambient temperature of 25°C.

8. **A method** in accordance with claim 5, **characterized in that** the method comprises a drying stage for the flavored popcorn kernels for the purpose of returning the flavored kernels of corn to their natural humidity comprising between 12% and 14% of the kernel of corn.

9. **A method** in accordance with claim 8, **characterized in that** the drying step of the flavored kernels of corn is carried out with hot air at a controlled temperature comprising a temperature range of between 50°C and 55 °C.

10. **A method** in accordance with claim 8, **characterized in that** the method further comprises a step for packaging the flavored and dried popcorn kernels in a closed recipient.

11. **A method** in accordance with claim 10, **characterized in that** the closed recipient is a container adapted for use in a microwave oven.

12. **Kernels of corn** for flavored popcorn, **characterized in that** the popcorn kernels are flavored in accordance with claims 1 to 11.

13. **A closed storage recipient** of popcorn kernels, **characterized in that** the closed recipient is a closed recipient is a containing bag of popcorn kernels flavored prior to being packaged, in accordance with claims 1 to 11, and that the containing bag is adapted for use in a microwave oven.
